(19) Europäisches Patentamt / European Patent Office / Office européen des brevets

(11) **EP 3 536 937 A1**

(12) **EUROPEAN PATENT APPLICATION**

(43) Date of publication:
**11.09.2019 Bulletin 2019/37**

(51) Int Cl.:
*F02D 41/14* (2006.01)  *F02P 5/152* (2006.01)
*F02D 41/30* (2006.01)  *F02D 41/24* (2006.01)

(21) Application number: **18183202.3**

(22) Date of filing: **12.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.03.2018  JP 2018041352**

(71) Applicant: **TOYOTA JIDOSHA KABUSHIKI KAISHA**
**Toyota-shi, Aichi-ken 471-8571 (JP)**

(72) Inventors:
• **Sata, Kota**
  **Aichi-ken, 471-8571 (JP)**
• **Matsunaga, Akio**
  **Aichi-ken, 471-8571 (JP)**
• **Yamakita, Masaki**
  **Shimogyo-ku, Kyoto 600-8427 (JP)**
• **Oyama, Hiroyuki**
  **Shimogyo-ku, Kyoto 600-8427 (JP)**

(74) Representative: **J A Kemp**
  **14 South Square**
  **Gray's Inn**
  **London WC1R 5JJ (GB)**

(54) **CONTROL DEVICE OF INTERNAL COMBUSTION ENGINE**

(57) The control device controls a control parameter based on values of operating parameters. The control device is configured to: acquire current values of the operating parameters; calculate, using a model, a probability distribution of an output parameter with respect to a value of the control parameter based on the acquired current values of the operating parameters; and set a target value of the control parameter based on the calculated probability distribution of an output parameter so that the probability of the value of the output parameter becoming equal to greater than a target value is most approached the target probability. The control parameter, operating parameters, and output parameter are parameters different from each other. The model is a model using a Gaussian process which outputs the probability distribution of an output parameter if values of the operating and control parameters are input.

FIG. 1

**Description**

FIELD

The present invention relates to a control device of an internal combustion engine.

BACKGROUND

In the past, it has been known to prepare a function model based on data of an internal combustion engine, and use this function model to calculate the value of output with respect to the input. Further, in preparing such a function model, it has also been known to use a Gaussian process (for example, PTL 1).

CITATION LIST

PATENT LITERATURE

PTL 1: Japanese Patent Publication No. 2014-206975A

SUMMARY

TECHNICAL PROBLEM

In this regard, in a model using a Gaussian process, the output takes the form of a probability distribution of a predetermined parameter. Therefore, even when using a model using a Gaussian process for control of an internal combustion engine, the model cannot be used as is for control of the internal combustion engine. Therefore, to use such a model for control of an internal combustion engine, the probability distribution output by this model has to be processed.
The present invention was made in consideration of the above problem and has as its object to provide a control device using an output of a model using a Gaussian process to suitably control an internal combustion engine.

SOLUTION TO PROBLEM

The present invention was made so as to solve the above problem and has as its gist the following.

(1) A control device of an internal combustion engine for controlling a control parameter, which is to be controlled, based on values of a plurality of operating parameters relating to operation of the internal combustion engine, wherein the control device is configured to:

acquire current values of the operating parameters;
calculate, using a model, a probability distribution of an output parameter with respect to a value of the control parameter, based on the acquired current values of the operating parameters; and
set a target value of the control parameter based on the calculated probability distribution of an output parameter, so that the probability of the value of the output parameter becoming equal to or greater than a reference value or equal to or less than a reference value, most approaches a target probability,
the control parameter, the operating parameters, and the output parameter are parameters different from each other, and
the model is a model using a Gaussian process which outputs the probability distribution of an output parameter if values of the operating parameters and a value of the control parameter are input.

(2) The control device of an internal combustion engine according to above (1), wherein
the internal combustion engine comprises a spark plug for igniting an air-fuel mixture in a combustion chamber,
the control parameter is an ignition timing, and the output parameter is a knock intensity.
(3) A control device of an internal combustion engine for controlling a control parameter, which is to be controlled, based on values of a plurality of operating parameters relating to operation of the internal combustion engine, wherein the control device is configured to:

acquire current values of the operating parameters,
calculate, using a model, a probability distribution of an output parameter with respect to a value of the control parameter, based on the acquired current values of the operating parameters; and

set a target value of the control parameter based on the calculated probability distribution of an output parameter, so that the probability of the value of the output parameter becoming a target value is the greatest,

the control parameter, the operating parameters, and the output parameter are parameters different from each other, and

the model is a model using a Gaussian process which outputs the probability distribution of an output parameter if values of the operating parameters and a value of the control parameter are input.

(4) The control device of an internal combustion engine according to above (3), wherein

the internal combustion engine comprises a fuel injector for supplying fuel to a combustion chamber,

the control parameter is an fuel injection amount from the fuel injector, and

the output parameter is an air-fuel ratio of exhaust gas.

(5) The control device of an internal combustion engine according to any one of above (1) to (4), wherein

the control device is configured to update the model on-board during operation of the internal combustion engine, and

the model is updated by a recursive Gaussian process based on the values of the operating parameters and value of the control parameter acquired during operation of the internal combustion engine, without updating hyperparameters representing the model.

(6) The control device of an internal combustion engine according to any one of above (1) to (5), wherein the model is a model using a heteroscedastic Gaussian process in which variance changes according to the values of the operating parameters and the value of the control parameter.

ADVANTAGEOUS EFFECTS OF INVENTION

According to the present invention, there is provided a control device using an output of a model using a Gaussian process to suitably control an internal combustion engine.

BRIEF DESCRIPTION OF DRAWINGS

[FIG. 1] FIG. 1 is a view schematically showing an internal combustion engine in which a control device is used.
[FIG. 2] FIG. 2 is a functional block diagram of the control device of an internal combustion engine.
[FIG. 3] FIG. 3 shows a probability distribution of knock intensity calculated by a knock intensity model.
[FIG. 4] FIG. 4 shows the relationship between a logarithm of knock intensity and probability at a predetermined ignition timing, in the probability distribution shown in FIG. 3.
[FIG. 5] FIG. 5 is a flow chart showing a control routine of control for calculation of a basic ignition timing in a basic ignition timing calculating part.
[FIG. 6] FIG. 6 is a functional block diagram of the control device of an internal combustion engine.
[FIG. 7] FIG. 7 shows the probability distribution of an exhaust air-fuel ratio calculated by an air-fuel ratio model.

DESCRIPTION OF EMBODIMENTS

Below, referring to the drawings, embodiments of the present invention will be explained in detail. Note that, in the following description, similar component elements are assigned the same reference notations.

Note that, in this Description, basically, parameters represented by strings of letters of only small letters (for example, "esa") indicate scalars, parameters represented by strings of letters including capital letters, not including M (for example, "X") indicate vectors, and parameters represented by strings of letters including capital letters including M (for example, "MX") indicate matrixes.

<First Embodiment>

«Explanation of Internal Combustion Engine Overall»

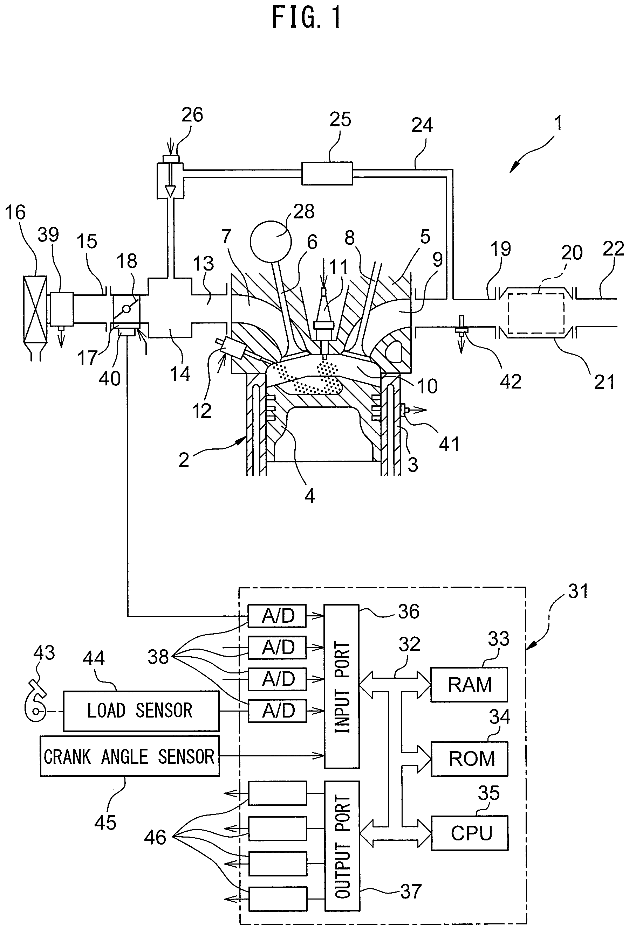

FIG. 1 is a view schematically showing an internal combustion engine in which a control device according to a first embodiment is used. As shown in FIG. 1, the internal combustion engine 1 comprises an engine body 2, cylinder block 3, pistons 4 reciprocating in the cylinder block 3, a cylinder head 5 fixed on the cylinder block 3, intake valves 6, intake ports 7, exhaust valves 8, and exhaust ports 9. Each combustion chamber 10 is formed between the piston 4 and cylinder head 5. The intake valve 6 opens and closes the intake port 7, while the exhaust valve 8 opens and closes the exhaust port 9. Further, in the engine body 2, a variable valve timing mechanism 28 is provided for controlling the valve timing of the intake valves 6. Note that, the engine body 2 may also be provided with a variable valve timing mechanism for controlling the valve timing of the exhaust valves 8.

As shown in FIG. 1, a spark plug 11 is arranged at the center portion of the inner wall surface of the cylinder head 5. A fuel injector 12 is arranged at the circumferential portion of the inner wall surface of the cylinder head 5. Each spark plug 11 is configured to generate a spark in response to an ignition signal. Further, each fuel injector 12 injects a predetermined amount of fuel into the combustion chamber 10 in accordance with an injection signal. Note that, the fuel injectors 12 may also be arranged to inject fuel into the intake port 7.

The intake port 7 of each cylinder is connected through a corresponding intake runner 13 to the surge tank 14, while the surge tank 14 is connected through an intake pipe 15 to an air cleaner 16. The intake port 7, intake runner 13, surge tank 14, and intake pipe 15 form an intake passage. Further, a throttle valve 18 driven by a throttle valve drive actuator 17 is arranged in the intake pipe 15.

On the other hand, the exhaust port 9 of the cylinder is connected to an exhaust manifold 19, while the exhaust manifold 19 is connected to a casing 21 housing an exhaust purification catalyst 20. The casing 21 is connected to an exhaust pipe 22. The exhaust port 9, exhaust manifold 19, casing 21, and exhaust pipe 22 form an exhaust passage.

The exhaust manifold 19 and the surge tank 14 are connected with each other by an EGR pipe 24. In the EGR pipe 24, an EGR cooler 25 is provided for cooling the EGR gas flowing from the exhaust manifold 19 to the surge tank 14 through the EGR pipe 24. In addition, in the EGR pipe 24, an EGR control valve 26 is provided for controlling the flow rate of the EGR gas supplied to the surge tank 14. The EGR pipe 24, EGR cooler 25, and EGR control valve 26 form an EGR mechanism for supplying part of the exhaust gas to the intake passage.

Further, the internal combustion engine 1 is provided with an electronic control unit (ECU) 31. The ECU 31 is comprised of a digital computer provided with components connected with each other through a bidirectional bus 32, such as a RAM (random access memory) 33, ROM (read only memory) 34, CPU (microprocessor) 35, input port 36, and output port 37.

At the intake pipe 15, an air flow meter 39 is provided for detecting the flow rate of air flowing through the intake pipe 15. At the throttle valve 18, a throttle opening degree sensor 40 is provided for detecting the opening degree of the throttle valve 18. In addition, at the cylinder block 3, a knock sensor 41 is provided for detecting the knock intensity, while at the exhaust manifold 19, an air-fuel ratio sensor 42 is provided for detecting the air-fuel ratio of the exhaust gas flowing through the exhaust manifold 19 (below, also referred to as the "exhaust air-fuel ratio"). The outputs of these air flow meter 39, throttle opening degree sensor 40, knock sensor 41, and air-fuel ratio sensor 42 are input through corresponding AD converters 38 to the input port 36. Note that, in the present embodiment, the knock sensor 41 is used to detect the knock intensity, but it is also possible to provide an in-cylinder pressure sensor in the cylinder head 5 for detecting the pressure in the combustion chamber 10 and calculate the knock intensity based on the output of this in-cylinder pressure sensor.

Further, a load sensor 44 is connected to at an accelerator pedal 43, and the load sensor 44 generates an output voltage proportional to the amount of depression of the accelerator pedal 43. The output voltage of the load sensor 44 is input through a corresponding AD converter 38 to the input port 36. The crank angle sensor 45, for example, generates an output pulse every time a crankshaft rotates 15 degrees. This output pulse is input to the input port 36. The engine speed is calculated, at the CPU 35, from the output pulses of this crank angle sensor 45.

On the other hand, the output port 37 is connected through corresponding drive circuits 46 to the spark plugs 11, the fuel injectors 12, and the throttle valve drive actuator 17. Therefore, the ECU 31 functions as a control device controlling the ignition timing by the spark plugs 11, the fuel injection timing and the amount of fuel injection from the fuel injectors 12, the opening degree of the throttle valve 18, etc.

<<Control of Ignition Timing>>

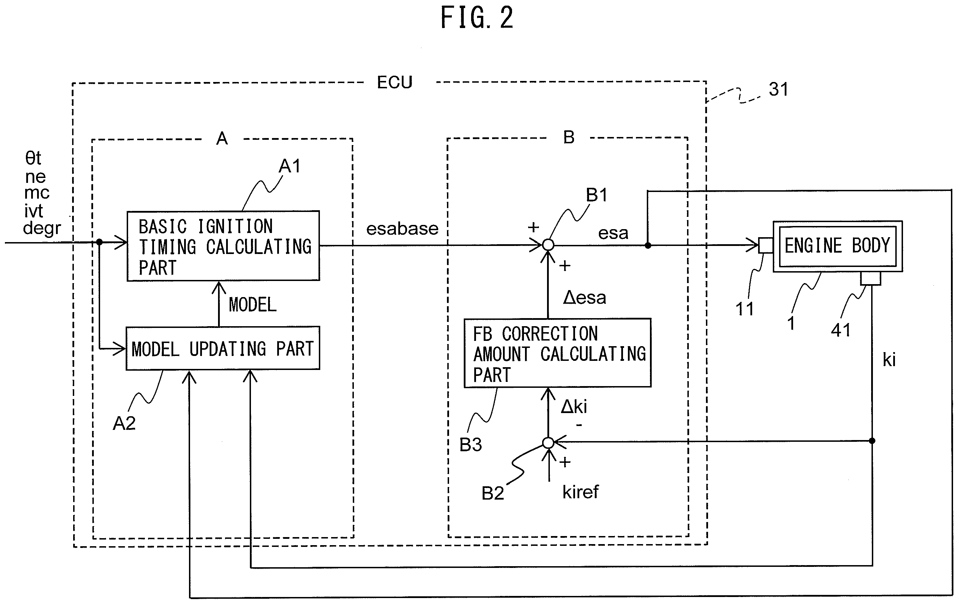

Next, referring to FIG. 2, the method for calculating the target value of the timing of ignition of the air-fuel mixture in the combustion chamber 10 by the spark plug 11 in the present embodiment, will be explained. FIG. 2 is a functional block diagram of the ECU 31 according to the present embodiment.

As will be understood from FIG. 2, the ECU 31 has two roughly divided functional blocks, in calculating the ignition timing, which is the control parameter to be controlled. Specifically, the ECU comprises a model utilizing part A for calculating a basic ignition timing, by using a knock intensity model, based on values of various types of parameters (below, also referred to as the "operating parameters") relating to operation of the internal combustion engine 1, and an FB control part B for controlling the ignition timing by feedback based on the knock intensity detected by the knock sensor 41. Therefore, the model utilizing part A performs feed forward control for calculating the basic ignition timing based on the values of the various types of operating parameters, while the FB control part B performs feedback control for calculating the target value of the ignition timing based on the detected knock intensity.

The model utilizing part A comprises a basic ignition timing calculating part A1 and a model updating part A2. In the basic ignition timing calculating part A1, a basic ignition timing esabase is calculated based on the current values of various types of operating parameters. Specifically, the operating parameters input to the basic ignition timing calculating part A1 include, for example, the opening degree $\theta t$ of the throttle valve 18, the engine speed ne, the amount of air mc sucked into the combustion chamber 10 (amount of intake air), the valve timing ivt of the intake valve 6, and/or the opening degree degr of the control valve 26, etc. (note that, in the present embodiment, the operating parameters do not include the ignition timing and the knock intensity).

Further, at the basic ignition timing calculating part A1, the values of the parameters representing the knock intensity model updated by the model updating part A2 (below, also referred to as the "model parameters") are read from the RAM 33. The knock intensity model is a model representing the probability distribution of knock intensity with respect to the values of the above-mentioned various types of operating parameters. In other words, the model in the present embodiment is a model representing the probability distribution of an output parameter with respect to the value of an operating parameter. The basic ignition timing calculating part A1 uses a knock intensity model in calculating the basic ignition timing esabase based on the current values of the various types of operating parameters. The specific method for calculating the ignition timing in the basic ignition timing calculating part A1 will be explained later.

The ignition timing esa at the spark plug 11 and the knock intensity ki when the air-fuel mixture is ignited by the spark plug 11 at the ignition timing esa, in addition to the various types of operating parameters relating to the operating state of the internal combustion engine 1 explained above, are input to the model updating part A2. At the model updating part A2, these input values of the operating parameters, ignition timing esa, and knock intensity ki are used as learning data for updating the knock intensity model. The model updating part A2 writes the values of the model parameters representing the updated knock intensity model into the RAM 33. The specific method for updating the knock intensity model will be explained later.

The FB control part B comprises an ignition timing calculating part B1, knocking judging part B2, and FB correction amount calculating part B3. The ignition timing calculating part B1 adds the basic ignition timing esabase output from the basic ignition timing calculating part A1 and the FB correction amount $\Delta esa$ calculated by the FB correction amount calculating part to calculate the ignition timing esa (esa=esabase+$\Delta esa$). The calculated ignition timing esa is transmitted as a control signal to the spark plug 11. The spark plug 11 ignites the air-fuel mixture at this ignition timing esa.

The knocking judging part B2 subtracts the knock reference strength kiref from the knock intensity ki detected by the knock sensor 41 to calculate the knock intensity difference $\Delta ki$ ($\Delta ki$=kiref-ki). In the present embodiment, if the knock intensity is equal to or greater than the knock reference strength kiref, it is judged that knocking has occurred. Therefore, when the knock intensity difference $\Delta ki$ calculated at the knocking judging part B2 is a negative value, it means that it is judged that knocking has occurred, while conversely when the knock intensity difference $\Delta ki$ is a positive value, it means it is judged that knocking has not occurred.

The FB correction amount calculating part B3 calculates the FB correction amount $\Delta esa$ based on the knock intensity difference $\Delta ki$. Specifically, the FB correction amount $\Delta esa$ is calculated based on the following formula (1).

$$\Delta esa_k = \Delta esa_{k-1} + a \cdot \Delta ki \ldots(1)$$

In the above formula (1), $\Delta esa_k$ indicates the currently calculated FB correction amount, while $\Delta esa_{k-1}$ indicates the FB correction amount calculated at the FB correction amount calculating part B3 the previous time. Further, "a" is a preset predetermined positive constant. As will be understood from formula (1), when knocking occurs and the knock intensity difference $\Delta ki$ is a negative value, the FB correction amount $\Delta esa$ becomes smaller. Conversely, when knocking does not occur and the knock intensity difference $\Delta ki$ is a positive value, the FB correction amount $\Delta esa$ becomes larger.

The FB correction amount $\Delta esa$ calculated by the FB correction amount calculating part B3, as explained above, is added at the ignition timing calculating part B1 to the basic ignition timing esabase. In this regard, the ignition timing in the present embodiment is expressed by the degree of advance from compression top dead center (°BTDC), therefore the larger the value of the ignition timing esa, the more the ignition timing is advanced. If knocking occurs, the FB correction amount $\Delta esa$ becomes smaller, therefore the ignition timing is retarded by the feedback control at the FB control part B. On the other hand, if knocking does not occur, the FB correction amount $\Delta esa$ becomes larger, therefore the ignition timing is advanced by the feedback control at the FB control part B.

Note that, the above-mentioned feedback control in the FB control part B is just one example. PID control or PI control or other various feedback control can be used in the FB control part B. Further, from the viewpoint of reducing the calculation load of the ECU 31, feedback control at the FB control part B need not be performed. In this case, only feed forward control by the model utilizing part A is performed, and thus the basic ignition timing esabase calculated by the basic ignition timing calculating part A1 is transmitted as a control signal to the spark plug 11.

<<Calculation of Basic Ignition Timing>>

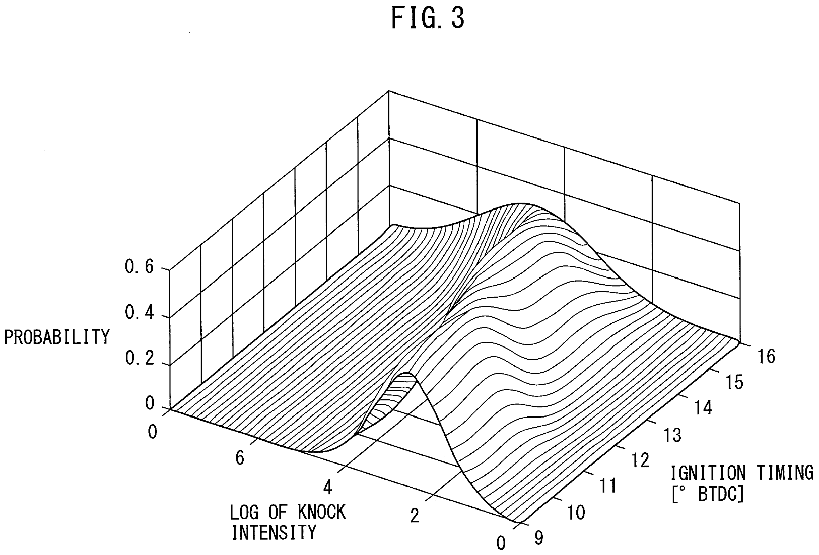

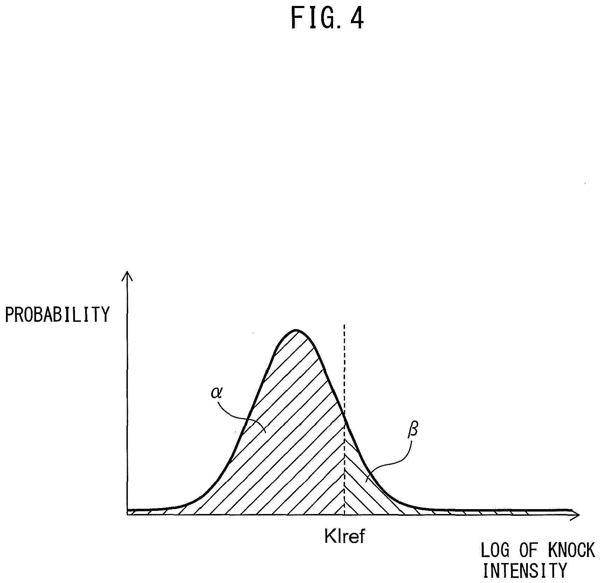

Next, referring to FIGS. 3 and 4, the method for calculating the basic ignition timing at the basic ignition timing calculating part A1 will be explained. FIG. 3 shows the probability distribution of a knock intensity calculated by the knock intensity model. FIG. 4 shows the relationship between the logarithm of knock intensity and probability at a predetermined ignition timing in the probability distribution shown in FIG. 3.

In this regard, it is known that the knock intensity does not necessarily become the same value even if the operating state of the internal combustion engine 1 is the same, but stochastically occurs. In particular, the probability distribution of a knock intensity is approximated by a lognormal distribution. Therefore, if the operating state of the internal combustion engine 1 is "X" and the probability of each knock intensity is "y", the relationship between X and "y" in the knock intensity model is represented by the following formula (2). Note that, X shows a vector having as parameters the ignition timing esa and the opening degree $\theta t$ of the throttle valve and engine speed ne and various other types of operating parameters (X= [esa, $\theta t$, ne, ...]).

$$y|X \sim N(f(X), \sigma^2) \dots (2)$$

In the above formula (2), f(X) indicates the mean value, while $\sigma^2$ indicates the variance. Further, $N(\mu, \sigma^2)$ indicates the normal distribution where the mean value is $\mu$ and the variance is $\sigma^2$. Therefore, the above formula (2) expresses that in the knock intensity model, the probability "y" of the knock intensity follows the normal distribution where the mean value is f(X) and the variance is $\sigma^2$ (X).

If the operating state of the internal combustion engine 1 other than the ignition timing is fixed, the probability "y" of each knock intensity calculated by the knock intensity model will change according to the ignition timing. This situation is shown in FIG. 3. FIG. 3 shows one example of the relationship among the ignition timing calculated at the knock intensity model, the logarithm of the knock intensity, and the probability of each knock intensity, in the state where the operating state of the internal combustion engine 1 other than the ignition timing is fixed.

FIG. 4 is a view showing the relationship between the logarithm of knock intensity and the probability thereof, at a certain ignition timing (for example, 10°BTDC) in the probability distribution shown in FIG. 3. FIG. 4 shows the probability distribution in the case where the ignition timing is also fixed, therefore FIG. 4 shows the probability distribution of the probability "y" of the knock intensity at any one operating state X. As shown in FIG. 4, in the present embodiment, the probability "y" of the knock intensity at a certain operating state X is approximated as one following a normal distribution.

In this regard, in the present embodiment, when the knock intensity ki is equal to or greater than a predetermined reference value kiref, it is judged that knocking has occurred in the internal combustion engine 1. Therefore, the integral value ($\alpha$ in FIG. 4) of the probability "y" at a region wherein the knock intensity ki is less than a reference value kiref in a certain operating state X, represents the probability pnt of knocking not occurring in the operating state X. On the other hand, the integral value ($\beta$ in FIG. 4) of the probability "y" at a region wherein the knock intensity ki is equal to or greater than the reference value kiref in a certain operating state X, represents the probability pkn of knocking occurring in the operating state X (below, also referred to as the "probability of knocking").

Further, in the present embodiment, the ignition timing at which the probability of knocking pkn is the target probability of knocking ptrg is calculated as the reference ignition timing esabase. The ignition timing at which the probability of knocking pkn is the target probability of knocking ptrg is basically unambiguously determined, but if the probability of knocking pkn is the target probability of knocking ptrg at a plurality of ignition timings, the ignition timing at the most advanced side in these plurality of ignition timings is calculated as the reference ignition timing esabase.

That is, in the present embodiment, the target value of a control parameter (ignition timing) is set based on the probability distribution of the output parameter (knock intensity) so that the probability of the value of the output parameter is equal to or greater than a reference value (probability of knocking) most approaches the target probability (target probability of knocking).

However, the above-mentioned knock intensity ki is calculated by, for example, inputting the ignition timing offset by predetermined angles (for example, 0.1°). Therefore, the probability of knocking pkn can only be calculated for each predetermined angle of ignition timing. Accordingly, the probability of knocking pkn with respect to the ignition timing cannot be continuously calculated. Therefore, it is not necessarily possible to calculate an ignition timing corresponding to the target probability of knocking ptrg. Therefore, in the present embodiment, it is also possible to calculate as a reference ignition timing esabase the ignition timing where the probability of knocking pkn is a value closest to the target probability of knocking ptrg, among the discretely input ignition timings. Alternatively, it is also possible to calculate as the reference ignition timing esabase the ignition timing where the probability of knocking pkn is equal to or less than the target probability of knocking ptrg and a value closest to the target probability of knocking ptrg, among the discretely input ignition timings.

Note that, as will be understood from FIG. 3, the mean value of the knock intensity (knock intensity where probability peaks at each ignition timing) basically becomes larger, as the ignition timing is more advanced, that is, as the angle of the ignition timing in FIG. 3 is larger. Therefore, basically, the probability of knocking pkn is also larger, as the ignition timing is more advanced. Therefore, the ignition timing where the probability of knocking pkn is the target probability of knocking ptrg is unambiguously determined as explained above.

Further, the probability of knocking pkn is larger as the ignition timing is more advanced. Therefore, determining the basic ignition timing so that the probability of knocking pkn is the target probability of knocking ptrg or a value closest to it, means substantially setting as the reference ignition timing esabase the ignition timing at the most advanced side in the ignition timings where the probability of knocking pkn is equal to or less than the target probability of knocking ptrg.

Further, in the above embodiment, the target value of the ignition timing is set so that the probability of knocking pkn most approaches the target probability of knocking ptrg. However, the target value of the control parameter (ignition timing) may also be set so that the probability of knocking not occurring pnt, that is, the probability of the value of the output parameter (knock intensity) is equal to or less than a reference value, most approaches the target probability.

In this regard, if the ignition timing is retarded, basically the timing where heat is generated along with combustion of the air-fuel mixture in the combustion chamber 10 is shifted to the retarded side, and the combustion of the air-fuel mixture becomes more moderate. Therefore, if the ignition timing is retarded, basically the heat efficiency deteriorates and accordingly the fuel efficiency and engine output deteriorate. Therefore, in the present embodiment, the probability of knocking pkn is maintained equal to or less than the target probability of knocking ptrg, while the ignition timing is set so that the fuel efficiency and engine output are higher as much as possible.

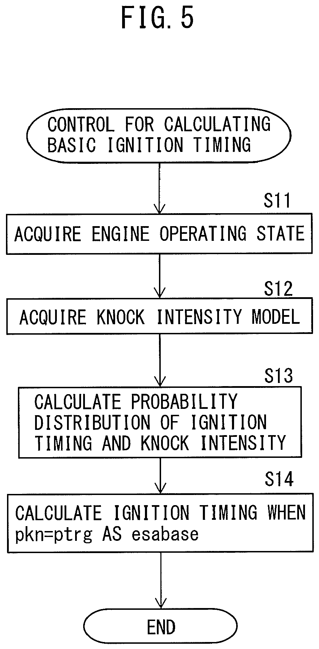

FIG. 5 is a flow chart showing a control routine of control for calculating the basic ignition timing at the basic ignition timing calculating part A1. The illustrated control routine is performed at every certain time interval.

As shown in FIG. 5, first, at step S11, the current values of various types of operating parameters are acquired. Specifically, such operating parameters include, for example, at least one of the opening degree θt of the throttle valve 18, the engine speed ne, the amount of intake air mc, the valve timing ivt of the intake valve 6, and the opening degree degr of the EGR control valve 26, etc.

The opening degree θt of the throttle valve 18 is detected by the throttle opening degree sensor 40, the engine speed ne is calculated based on the output of the crank angle sensor 45, and the amount of intake air mc is calculated based on the output of the air flow meter 39. The valve timing ivt of the intake valve 6 may be detected by a sensor (not shown) for detecting the valve timing of the intake valve, or may be calculated based on the control signal to the variable valve timing mechanism 28. Further, the opening degree degr of the EGR control valve 26 may be detected by a sensor (not shown) for detecting the opening degree of the EGR control valve 26, or may be calculated based on the control signal to the EGR control valve 26.

Next, at step S12, the model parameters representing the knock intensity model calculated by the model updating part A2 are acquired from the RAM 33. At the model updating part A2, the values of part of the various types of model parameters representing the knock intensity model are updated by learning, therefore at step S12, specifically, the updated values of the various types of parameters are acquired.

Next, at step S13, the probability distribution of a knock intensity with respect to the ignition timing such as shown in FIG. 3 is calculated, by using the knock intensity model acquired at step S12, based on the current values of the parameters relating to the operating state of the internal combustion engine 1 acquired at step S11.

Next, at step S14, the probability of knocking pkn at each ignition timing is calculated based on the probability distribution of a knock intensity with respect to the ignition timing calculated at step S13. Further the ignition timing at which the calculated probability of knocking pkn is a value closest to the target probability of knocking ptrg is calculated as the basic ignition timing esabase.

<<Knock Intensity Model>>

Next, the methods for preparing and updating the knock intensity model will be explained. As explained above, it is known that the knocking phenomenon stochastically occurs even in the same operating state and that in particular the probability distribution of the logarithm of the knock intensity is approximated well by normal distribution. Therefore, in the present embodiment, a Gaussian process (GP) model is used as the knock intensity model. By using a GP model as the knock intensity model in this way, it becomes possible to construct a model from a small amount of learning data.

<<Preparation of Knock Intensity Model>>

First, the method for preparing a knock intensity model will be explained. "Preparation of a knock intensity model" means setting the values of the model parameters representing the GP model of the knock intensity model. The knock intensity model is prepared, for example, before shipment of the vehicle mounting the internal combustion engine 1. In preparing the knock intensity model, a plurality of sets of learning data are utilized.

In this regard, when considering using "n" sets of learning data for preparing the knock intensity model, assume the learning data input to the knock intensity model is MX= [$X_1$, $X_2$, ..., $X_n$], the learning data output from the knock intensity model is Y= [$y_1$, $y_2$, ..., $y_n$]$^T$, and the learning data is D= (MX, Y). The input learning data $X_n$ include various types of operating parameters representing the operating state of the internal combustion engine (opening degree $\theta t_n$ of throttle valve, engine speed $ne_n$, etc.) and ignition timing $esa_n$. Further, the output learning data includes the knock intensity ki detected by the knock sensor 41.

If representing any kernel function as k($\cdot$,$\cdot$) (where a vector or matrix is entered for "$\cdot$"), when the prior distribution of GP is f(X) ~GP(0, k(X, X')) and the observation noise is $\sigma^2$, that is, when y|X~N(f(X),$\sigma^2$), the predictive distribution is represented by the following formula (3):

$$y_t|X_*, \Theta, D \sim N\left(\mu_{f*}, \sigma^2_{f*}\right) \dots (3)$$

In this regard, $X_*$ in formula (3) expresses any input data when using the knock intensity model to actually calculate the probability distribution of a knock intensity, while $y_*$ expresses the output data corresponding to this input data (that is, the probability distribution of a knock intensity). Further, $\Theta$ expresses a model parameter representing the knock intensity model.

In addition, the mean value $\mu_{f*}$ and variance $\sigma^2_{f*}$ in formula (3) are respectively represented by the following formulas (4) and (5):

$$\mu_{f*} = k(X_*, MX)(MK + \sigma^2 MI)^{-1}Y \dots (4)$$

$$\sigma_{f*} = k(X_*, X_*) - k(X_*, MX)(MK + \sigma^2 MI)^{-1}k(MX, X_*) + \sigma^2 MI \dots (5)$$

In formula (4) and formula (5), the matrix MI expresses an identity matrix. Further, the matrix MK=k(MX, MX). The matrix representing the kernel function when the matrix X is given is defined by the following formula (6) and formula (7):

$$k(MX, MX) = \left[k_{ij}\right], \left[k_{ij}\right] = k\left(X_i, X_j\right) \dots (6)$$

$$k(X_*, MX) = [k(X_*, X_1), \cdots, k(X_*, X_n)]$$
$$= k(MX, X_*)^T \dots (7)$$

GP is mainly determined in nature by a kernel function k($\cdot$,$\cdot$). In the present embodiment, an ARD kernel extended from a Gaussian kernel is used as the kernel. Therefore, the kernel function in the present embodiment is represented as in the following formula (8):

$$k(X,X')=cov\{f(X),f(X')\}$$

$$=\lambda^2 exp(-\frac{1}{2}(X-X')^T M\Lambda^{-1}(X-X')) \dots (8)$$

In formula (8), $M\Lambda$=diag($l_1^2$, $l_2^2$ ..., $l_d^2$). This is a scale characterizing the relationship among the elements of the vector X or the degrees of effect of the elements of the vector X on the knock intensity. Further, $\lambda^2$ is a parameter representing the variance of the latent function. These parameters $\Theta$= [$l_i^2$,$l_2^2$ , ..., $l_d^2$,$\lambda^2$,$\sigma^2$] are called "hyperparameters" and form parts of the model parameters representing the knock intensity model.

For these parameters $\Theta$, for example, the EM method is used to find the optimal values by the maximization of marginal likelihood shown in the following formula (9). Further, log(p(Y|MX, $\Theta$)) in formula (9) is represented by the following formula (10):

$$\Theta_{\text{best}} = \underset{\theta}{\text{argmax}} \log(p(Y\,|MX,\Theta)) \ \dots \ (9)$$

$$\log(p(Y|MX,\Theta)) = -\frac{1}{2}Y^T(MK+\sigma^2MI)^{-1}Y - \frac{1}{2}\log|MK+\sigma^2MI| - \frac{n}{2}\log 2\pi \ \dots \ (10)$$

By using the above-mentioned formulas (3) to (10), it is possible to prepare a knock intensity model from "n" sets of learning data (MX and Y). Specifically, from formulas (3) to (10), the values of the model parameters at the knock intensity model are calculated based on the "n" sets of learning data.

In the thus prepared knock intensity model, if the input data $X_*$ is input, the mean value $\mu_{f*}$ can be calculated by using the above formula (4) and the variance $\sigma_{f*}^2$ can be calculated by using the above formula (5). That is, if various types of operating parameters and ignition timing esa are input, it is possible to calculate the probability distribution of a knock intensity at the operating state as a normal distribution such as shown in FIG. 4 where the mean value is $\mu_{f*}$ and the variance is $\sigma_{f*}^2$.

Note that, in the above embodiment, an ARD kernel is used as the kernel. An ARD kernel exhibits good performance when the learning model is continuous and smooth, therefore in the present embodiment as well can calculate the probability distribution of a knock intensity with a relatively high precision. However, it is possible to use a Gaussian kernel or Spectral Mixture (SM) kernel, neural network kernel, or various other kernels, as the kernel.

In this case, if using a Gaussian kernel, it is possible to reduce the calculation load accompanying learning calculations, but the expressive power falls compared with an ARD kernel. Further, with an SM kernel, there is a possibility of good performance being exhibited if the learning model has a plurality of high frequency components, but the calculation load accompanying learning calculations increases.

<<Updating of Knock Intensity Model>>

In this regard, the knock intensity for each operating state of an internal combustion engine 1 is not necessarily constant. It changes as the operating time of the internal combustion engine 1 becomes longer. This, for example, arises due to carbon, etc., depositing in the combustion chamber 10 and the state of combustion of the air-fuel mixture in the combustion chamber 10 changing. Therefore, in order to maintain high the precision of estimation of the probability distribution of a knock intensity by a knock intensity model, the knock intensity model must be updated at given intervals.

In this regard, however, if using a technique similar to the above-mentioned method for preparing a knock intensity model to update the knock intensity model, each time updating the knock intensity model, all of the above-mentioned calculations would have to be performed. The knock intensity model basically has to be updated on board during operation of the internal combustion engine, therefore if updating the knock intensity model in this way, the calculation load at the ECU 31 would be extremely high.

In this regard, in a local model considering only the vicinity of a knock boundary, sufficient approximation would be possible by a GP model with scalar observation noise. That is, by preparing a knock intensity model as explained above so as to roughly estimate the knock boundary, it would be possible to find detailed changes in the knock boundary by GP with a low calculation load. Therefore, in the present embodiment, in updating the knock intensity model, a recursive Gaussian process (RGP) is used.

Specifically, the following technique is used to update the knock intensity model. First, in the same way as the GP, the learning data D is defined as (MX, Y) and F is defined as f(MX). In this regard, F is postulated as a GP model having an initial distribution $p(F) = N(F|\mu_0^f, MC_0^f)$ (Note that, $\mu_0^f$ indicates a vector. Below, the same for "$\mu$"). In this regard, $\mu_0^f$ is calculated at the time of preparation of the above-mentioned knock intensity model, and $MC_0^f = k(MX, MX)$. In the GP model, the once defined prior distribution will not change, but the prior distribution in the RGP model is updated on board by learning data if newly input learning data $X_k$ and corresponding output learning data $y_k$ are given. The knock intensity model is updated by the following calculation formula in the same way as the Kalman filter update rule.

First, using the posterior distribution of step "k-1", the predictive distribution $p(Y_k|Y_{1:k-1}) = N(Y_k|\mu_k^p, MC_k^p + \sigma^2MI)$ at step "k" is calculated by the following formulas (11) and (12). Further, $MJ_k$ in formulas (11) and (12) and $MB_k$ in formula (12) are respectively calculated by the following formulas (13) and (14):

$$\mu_k^p = MJ_k\mu_{k-1}^f \ \dots \ (11)$$

$$MC_k^p = MB_k + MJ_k MC_{k-1}^f MJ_k^T \ldots (12)$$

$$MJ_k = k(X_k, MX) \cdot k(MX, MX)^{-1} \ldots (13)$$

$$MB_k = k(X_k, X_k) - MJ_t k(MX, X_k) \ldots (14)$$

Next, the posterior distribution of "f" is calculated, by using the newly output learning data $y_k$, by the following formulas (15) and (16). Further, the $MG_k$ in formulas (15) and (16) is calculated by the following formula (17):

$$\mu_k^f = \mu_{k-1}^f + MG_k \cdot (Y_k - \mu_k^p) \ldots (15)$$

$$MC_k^f = MC_{k-1}^f - MG_k MJ_k MC_{k-1}^f \ldots (16)$$

$$MG_k = MC_{k-1}^f MJ_k^T \cdot (MC_k^p + \sigma^2 MI)^{-1} \ldots (17)$$

As will be understood from the above formulas (11) to (17), in updating the knock intensity model in the present embodiment, the hyperparameters are not updated. In addition, in updating the knock intensity model in the present embodiment, calculation is performed for only the newly added learning data, and calculation is not performed for the past learning data. Therefore, it is possible to reduce the calculation load of the ECU 31 accompanying updating of the knock intensity model.

<Second Embodiment>

Next, a control device according to a second embodiment will be explained. The configuration and control in the control device according to the second embodiment are basically similar to the configuration and control in the control device according to the first embodiment. Therefore, below, the parts different from the control device according to the first embodiment will be focused on in the explanation.

In this regard, in the first embodiment, in finding the predictive distribution of formula (3), the observation noise $\sigma^2$ of GP is postulated as a scalar value which does not depend on the input values. Therefore, the knock intensity model of the first embodiment is not represented as a model in which the observation noise $\sigma^2$ has a variance dependent on the input values. However, the variance in probability distribution of a knock intensity is considered to change in accordance with the operating parameters, therefore there is a possibility that the probability distribution of a knock intensity will not necessarily be able to be estimated by a high precision in the knock intensity model in the above first embodiment.

Therefore, in the present embodiment, to enable the variance dependent on the input values, that is, the values of the operating parameters, to be represented, the heteroscedastic Gaussian process (HGP) adding a noise model shown in the following formula (18) will be considered.

$$y|X \sim N(f(X), \sigma_n^2(X)) \ldots (18)$$

$$v = \log(\sigma_n^2(X)) \sim GP(m_n(X), k_n(X, X')) \ldots (19)$$

Note that, in formulas (18) and (19), $\sigma_n^2(X)$ shows the variance dependent on the values of the operating parameters.

"v" also follows a normal distribution, therefore can be represented as shown in the following formula (20). Further, in the present embodiment, an ARD kernel is used for "v" as well, therefore the kernel function is represented as in the following formula (21):

$$v|X \sim N(f_v(X), \sigma_v^2(X)) \ldots (20)$$

$$k_n(X,X')=\lambda_n{}^2\exp(-\frac{1}{2}(X-X')^T M\Lambda_n{}^{-1}(X-X')) \dots (21)$$

In this regard, $M\Lambda_n=\text{diag}(m_1{}^2, m_2{}^2, ..., m_d{}^2)$ and is a scale characterizing the relationship among the elements of the vector X or the degrees of effect of the elements of the vector X on the variance. Further, $\lambda_n{}^2$ is a parameter representing the variance of the latent function. These parameters are also hyperparameters. Therefore, the hyperparameters used in the knock intensity model in the present embodiment are represented as $\Phi=[l_1{}^2, l_2{}^2, ..., l_d{}^2, \lambda^2, m_1{}^2, m_2{}^2, ..., m_d{}^2, \lambda_n{}^2, \sigma^2]$.

The learning for the model is, for example, performed by applying the expectation propagation method or EM method. In this learning, the posterior distribution p(v|D) of "v" is approximated as the Gaussian distribution q(v|D), and then the optimum values of the hyperparameters $\Phi$ are calculated by the maximization of marginal likelihood. The predicted value $y_*$ of the output data when the input data $X_*$ is given, is calculated by the following formula (22), by using

$q(v_*|X_*, D) =N(\mu_{v*}, \sigma_{v*}^2)$ approximated by the Gaussian distribution. In formula (22), the mean value $\mu_*$ and

variance $\sigma_*^2$ are respectively represented by the following formulas (23) and (24):

$$y_*|X_*,\phi,D \sim N(\mu_*,\sigma_*^2) \dots (22)$$

$$\mu_*=\mu_{f*} \dots (23)$$

$$\begin{aligned}\sigma_*^2&= \iint y_*^2 p(y_*|v_*)q(v_*|X_*,D)\, dy_* dv_*-\mu_*^2\\&= \int (f_*^2+\exp(v_*))\, q(v_*|X_*,D)dv_*-\mu_*^2\\&=\sigma_{f*}^2+ \int \exp(v_*)q(v_*|X_*,D)dv_*\\&=\sigma_{f*}^2+\exp(\mu_{v*}+0.5\sigma_{v*}^2) \dots (24)\end{aligned}$$

In the knock intensity model prepared as above, if the input data $X_*$ is input, it is also possible to calculate the mean value $\mu_*$ by using the above formulas (4) and (23), and possible to calculate the variance $\sigma_*^2$ by using the above formulas (5) and (24). That is, if various types of operating parameters and the ignition timing esa are input, the probability distribution of a knock intensity in the operating state can be calculated as the normal distribution such as shown in FIG. 4 where the mean value is $\mu_{f*}$ and the variance is $\sigma_{f*}^2$.

According to the present embodiment, the variance in the knock intensity model is made one which changes in accordance with the input data in calculating the probability distribution of a knock intensity. Therefore, it is possible to find the probability distribution of a knock intensity with a higher precision.

In addition, even if preparing a knock intensity model based on the technique of the present embodiment, the knock intensity model can be updated by using a recursive Gaussian process. In this case, in the same way as the first embodiment, the hyperparameters $\Phi$ are not updated. Accordingly, in the present embodiment as well, it is possible to reduce the load of calculation of the ECU 31 accompanying updating of the knock intensity model.

<Third Embodiment>

Next, a control device according to a third embodiment will be explained. The configuration and control in the control device according to the third embodiment are basically similar to the configurations and controls of the control devices according to the first and second embodiments. Therefore, below, the parts different from the control devices according to the first and second embodiments will be focused on in the explanation.

In the first embodiment, the ignition timing was controlled based on the knock intensity. In this regard, in the present embodiment, the fuel injection amount from the fuel injector 12 is controlled based on the exhaust air-fuel ratio.

<<Control of Fuel Injection Amount>>

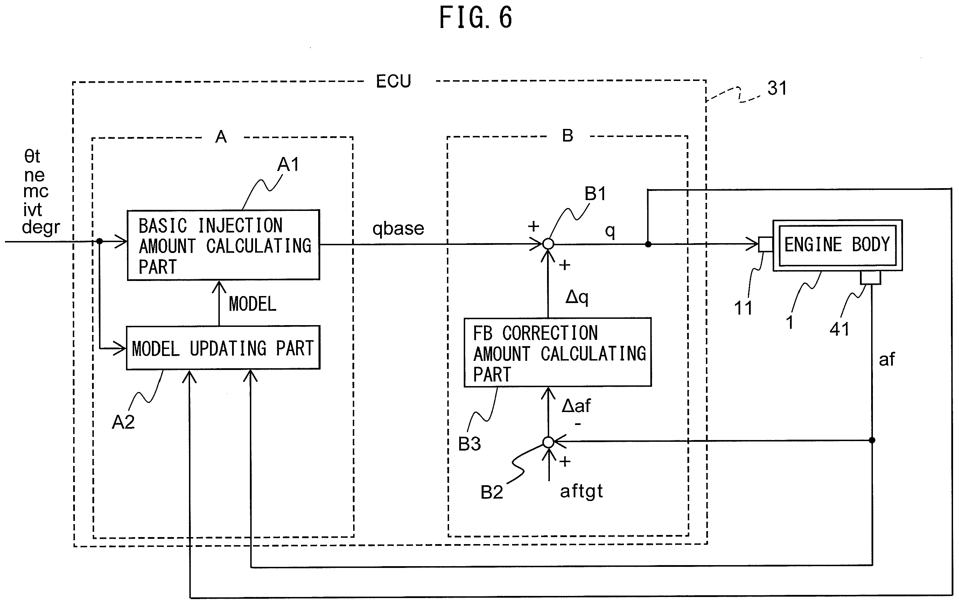

Referring to FIG. 6, the method for calculating the fuel injection amount from the fuel injector 12 in the present embodiment will be explained. FIG. 6 is a functional block diagram of the ECU 31 according to the present embodiment.

As will be understood from FIG. 6, the ECU 31 has two roughly divided functional blocks for calculating the fuel injection amount, which is the control parameter to be controlled. Specifically, the ECU comprises a model utilizing part A for calculating a basic fuel injection amount, by using an air-fuel ratio model, based on the values of the operating parameters, and an FB control part B for controlling by feedback a fuel injection amount based on the output of the air-fuel ratio sensor 42. Therefore, the model utilizing part A performs feed forward control for calculating the basic injection amount based on the values of the various types of operating parameters, while the FB control part B performs feedback control for calculating the fuel injection amount based on the detected exhaust air-fuel ratio.

The model utilizing part A comprises a basic injection amount calculating part A1 and model updating part A2. At the basic injection amount calculating part A1, the basic fuel injection amount qbase is calculated based on the current values of various types of operating parameters. Note that, in the present embodiment, the operating parameters are deemed to not include the fuel injection amount and exhaust air-fuel ratio.

Further, the values of the model parameters representing the air-fuel ratio model updated by the model updating part A2 are read from the RAM 33 into the basic ignition timing calculating part A1. The air-fuel ratio model is a model representing the probability distribution of an exhaust air-fuel ratio with respect to the above-mentioned values of various types of operating parameters. The basic injection amount calculating part A1 uses the air-fuel ratio model in calculating the basic injection amount qbase based on the current values of the various types of operating parameters. The specific method for calculating the fuel injection amount at the basic injection amount calculating part A1 will be explained later.

The fuel injection amount "q" and the air-fuel ratio af when fuel of the fuel injection amount "q" is injected, in addition to the various types of operating parameters relating to the operating state of the internal combustion engine 1 explained above, are input to the model updating part A2,. At the model updating part A2, the these input values of the operating parameters, fuel injection amount "q", and air-fuel ratio af are used as learning data for updating the air-fuel ratio model. The model updating part A2 writes the values of the model parameters representing the air-fuel ratio model updated as above into the RAM 33. The specific method for updating the air-fuel ratio model will be explained later.

The FB control part B is comprised an injection amount calculating part B1, air-fuel ratio difference calculating part B2, and FB correction amount calculating part B3. The ignition timing calculating part B1 adds the basic fuel injection amount qbase output from the basic injection amount calculating part A1 and the FB correction amount $\Delta q$ calculated by the FB correction amount calculating part B3 so as to calculate the fuel injection amount "q" (q=qbase+$\Delta q$). The calculated fuel injection amount "q" is sent as a control signal to the fuel injector 12, then the fuel injector 12 injects this fuel injection amount "q" of fuel.

The air-fuel ratio difference calculating part B2 subtracts the target air-fuel ratio aftgt from the exhaust air-fuel ratio af detected by the air-fuel ratio sensor 42 to calculate the air-fuel ratio difference $\Delta af$($\Delta af$=af-aftgt). The FB correction amount calculating part B3 calculates the FB correction amount $\Delta q$ based on the air-fuel ratio difference $\Delta af$. Specifically, the FB correction amount $\Delta q$ is calculated based on the following formula (25):

$$\Delta q_k = \Delta q_{k-1} + b \cdot \Delta q \ \ldots \ (25)$$

In the above formula (25), $\Delta q_k$ indicates the currently calculated amount of FB correction, while $\Delta q_{k-1}$ indicates the amount of FB correction calculated the previous time at the FB correction amount calculating part B3. Further, "b" is a predetermined given positive constant.

Note that, in the present embodiment as well, the FB control part B can use various feedback controls. Further, feedback control need not be performed at the FB control part B.

<<Calculation of Basic Fuel Injection Amount>>

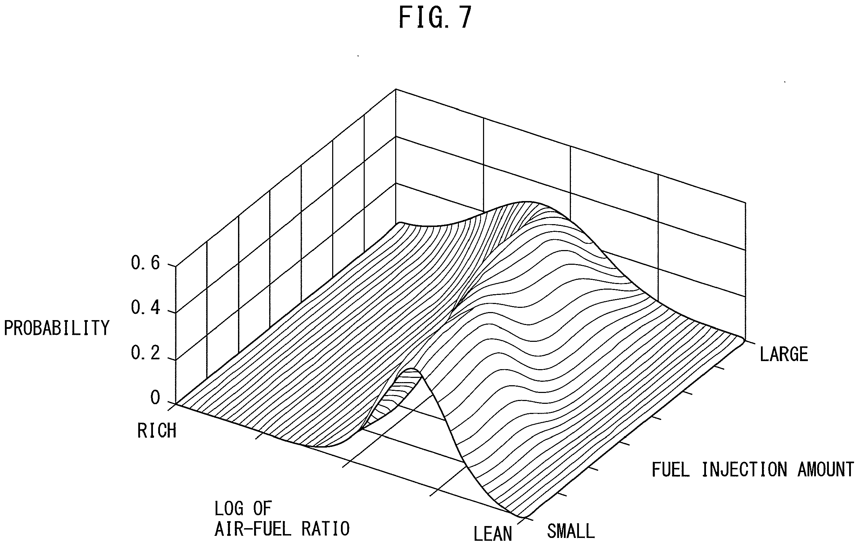

Next, referring to FIG. 7, the method for calculating the basic fuel injection amount in the basic injection amount calculating part A1 will be explained. FIG. 7 shows the probability distribution of an exhaust air-fuel ratio calculated by the air-fuel ratio model.

In this regard, the exhaust air-fuel ratio does not necessarily become the same value even if the operating state of the internal combustion engine 1 is the same, but stochastically occurs. In particular, the probability distribution of an exhaust air-fuel ratio is approximated by a lognormal distribution. Therefore, if the operating state of the internal combustion engine 1 is "X" and the probability of each air-fuel ratio is "y", the relationship between X and "y" in the air-fuel ratio model is represented by the following formula (26), in the same way as the above formula (2). Note that, X shows a vector having as parameters the fuel injection amount "q" and opening degree $\theta t$ of the throttle valve and engine speed ne and various other types of operating parameters (X= [q, $\theta t$, ne, ...]).

$$y|X \sim N(f(X), \sigma^2) \ldots (26)$$

If the operating state of the internal combustion engine 1 other than the fuel injection amount is fixed, the probability "y" of each air-fuel ratio calculated by the air-fuel ratio model will change according to the amount of fuel injection. This situation is shown in FIG. 7. FIG. 7 shows one example of the relationship among the fuel injection amount calculated in the air-fuel ratio model, the logarithm of the exhaust air-fuel ratio, and the probability of each air-fuel ratio in the state where the operating state of the internal combustion engine 1 other than the fuel injection amount is fixed.

If the probability distribution of an exhaust air-fuel ratio as shown in FIG. 7 can be obtained, it is possible to calculate the fuel injection amount where the probability of the air-fuel ratio becoming a specific target air-fuel ratio is the greatest. Therefore, in the present embodiment, the fuel injection amount where the probability of the output parameter of the air-fuel ratio becoming the target air-fuel ratio is the greatest is calculated as the basic fuel injection amount qbase. That is, in the present embodiment, the target value of the control parameter (fuel injection amount) is set based on the probability distribution of an output parameter (air-fuel ratio) so that the probability of the value of the output parameter becoming the target value (target air-fuel ratio) is the greatest.

Note that, the air-fuel ratio model in the present embodiment also, in the same way as the knock intensity models in the first and second embodiments, is prepared using a Gaussian process or heteroscedastic Gaussian process. In addition, the air-fuel ratio model in the present embodiment also, in the same way as the knock intensity models in the first and second embodiments, is updated using a recursive Gaussian process.

Note that, in the present embodiment, the fuel injection amount is controlled based on the exhaust air-fuel ratio, but control similar to the control in the present embodiment may also be applied to other control. For example, control similar to the control in the present embodiment may also be used for controlling the opening degree of the EGR valve based on the amount of supply of EGR gas to the combustion chamber 10 or for controlling the valve timing of the intake valve 6 or valve timing of the exhaust valve 8 based on the amount of supply of EGR gas to the combustion chamber 10.

REFERENCE SIGNS LIST

1. internal combustion engine

    6. intake valve
    8. exhaust valve
    11. spark plug
    12. fuel injector
    31. ECU
    39. air flow meter
    40. throttle opening degree sensor
    41. knock sensor

**Claims**

1. A control device of an internal combustion engine (1) for controlling a control parameter, which is to be controlled, based on values of a plurality of operating parameters relating to operation of the internal combustion engine, wherein the control device is configured to:

    acquire current values of the operating parameters;
    calculate, using a model, a probability distribution of an output parameter with respect to a value of the control parameter, based on the acquired current values of the operating parameters; and
    set a target value of the control parameter based on the calculated probability distribution of an output parameter, so that the probability of the value of the output parameter becoming equal to or greater than a reference value or equal to or less than a reference value, most approaches a target probability,
    the control parameter, the operating parameters, and the output parameter are parameters different from each other, and
    the model is a model using a Gaussian process which outputs the probability distribution of an output parameter if values of the operating parameters and a value of the control parameter are input.

2. The control device of an internal combustion engine according to claim 1, wherein

the internal combustion engine (1) comprises a spark plug (11) for igniting an air-fuel mixture in a combustion chamber (10),
the control parameter is an ignition timing, and the output parameter is a knock intensity.

3. A control device of an internal combustion engine (1) for controlling a control parameter, which is to be controlled, based on values of a plurality of operating parameters relating to operation of the internal combustion engine, wherein the control device is configured to:

acquire current values of the operating parameters,
calculate, using a model, a probability distribution of an output parameter with respect to a value of the control parameter, based on the acquired current values of the operating parameters; and
set a target value of the control parameter based on the calculated probability distribution of an output parameter, so that the probability of the value of the output parameter becoming a target value is the greatest,
the control parameter, the operating parameters, and the output parameter are parameters different from each other, and
the model is a model using a Gaussian process which outputs the probability distribution of an output parameter if values of the operating parameters and a value of the control parameter are input.

4. The control device of an internal combustion engine according to claim 3, wherein

the internal combustion engine (1) comprises a fuel injector (12) for supplying fuel to a combustion chamber (10),
the control parameter is an fuel injection amount from the fuel injector (12), and
the output parameter is an air-fuel ratio of exhaust gas.

5. The control device of an internal combustion engine according to any one of claims 1 to 4, wherein

the control device is configured to update the model on-board during operation of the internal combustion engine (1), and
the model is updated by a recursive Gaussian process based on the values of the operating parameters and value of the control parameter acquired during operation of the internal combustion engine (1), without updating hyperparameters representing the model.

6. The control device of an internal combustion engine according to any one of claims 1 to 5, wherein the model is a model using a heteroscedastic Gaussian process in which variance changes according to the values of the operating parameters and the value of the control parameter.

# FIG. 1

FIG. 2

FIG. 3

# FIG. 4

# FIG. 5

```
CONTROL FOR CALCULATING
   BASIC IGNITION TIMING

              │
              │  S11
              ▼
┌────────────────────────────────┐
│ ACQUIRE ENGINE OPERATING STATE │
└────────────────────────────────┘
              │
              │  S12
              ▼
┌────────────────────────────────┐
│  ACQUIRE KNOCK INTENSITY MODEL │
└────────────────────────────────┘
              │
              │  S13
              ▼
┌────────────────────────────────┐
│  CALCULATE PROBABILITY         │
│  DISTRIBUTION OF IGNITION      │
│  TIMING AND KNOCK INTENSITY    │
└────────────────────────────────┘
              │
              │  S14
              ▼
┌────────────────────────────────┐
│ CALCULATE IGNITION TIMING WHEN │
│ pkn=ptrg AS esabase            │
└────────────────────────────────┘
              │
              ▼
           END
```

# FIG. 6

EP 3 536 937 A1

# FIG. 7

Europäisches
Patentamt

European
Patent Office

Office européen
des brevets

# EUROPEAN SEARCH REPORT

**Application Number**

EP 18 18 3202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2016 210424 A1 (BOSCH GMBH ROBERT [DE]) 14 December 2017 (2017-12-14) | 1-3 | INV.<br>F02D41/14 |
| Y | * abstract *<br>* claims 1, 4, 7 *<br>* figure 2 *<br>* paragraph [0040] * | 4-6 | F02P5/152<br>F02D41/30<br>F02D41/24 |
| Y | DE 10 2015 208513 A1 (BOSCH GMBH ROBERT [DE]) 10 November 2016 (2016-11-10)<br>* abstract *<br>* paragraph [0023] - paragraph [0026] *<br>* claim 1 * | 4,5 | |
| Y | DE 10 2013 206304 A1 (BOSCH GMBH ROBERT [DE]) 16 October 2014 (2014-10-16)<br>* abstract *<br>* paragraph [0002] *<br>* claims 1, 5 * | 6 | |
| A | Carl Edward Rasmussen: "Gaussian Processes for Machine Learning",<br>,<br>1 January 2006 (2006-01-01), pages 7-21, XP055335181,<br>DOI: 10.1007/978-3-540-28650-9_4<br>ISBN: 978-0-262-18253-9<br>Retrieved from the Internet:<br>URL:https://link.springer.com/chapter/10.1 007%2F978-3-540-28650-9_4<br>[retrieved on 2017-01-13]<br>* the whole document * | 1-6 | TECHNICAL FIELDS SEARCHED (IPC)<br><br>F02D<br>F02P |
| A | EP 3 062 176 A2 (VOLKSWAGEN AG [DE]) 31 August 2016 (2016-08-31)<br>* abstract *<br>* paragraph [0011] - paragraph [0014] *<br>* claims 1, 2 * | 1-6 | |

The present search report has been drawn up for all claims

| Place of search | Date of completion of the search | Examiner |
|---|---|---|
| The Hague | 29 November 2018 | Kämper, Fabian |

EPO FORM 1503 03.82 (P04C01)

## ANNEX TO THE EUROPEAN SEARCH REPORT
## ON EUROPEAN PATENT APPLICATION NO.

EP 18 18 3202

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2018

| Patent document cited in search report | Publication date | Patent family member(s) | Publication date |
|---|---|---|---|
| DE 102016210424 A1 | 14-12-2017 | CN     107489584 A<br>DE 102016210424 A1 | 19-12-2017<br>14-12-2017 |
| DE 102015208513 A1 | 10-11-2016 | NONE | |
| DE 102013206304 A1 | 16-10-2014 | NONE | |
| EP 3062176     A2 | 31-08-2016 | DE 102015203210 A1<br>EP     3062176 A2 | 25-08-2016<br>31-08-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014206975 A